# EUROPEAN PATENT SPECIFICATION

(11) **EP 3 187 395 B1**
(45) Date of publication and mention of the grant of the patent: **17.07.2019**
(21) Application number: 14900558.9
(22) Date of filing: 29.08.2014
(51) Int. Cl.: B62D 6/00, B62D 5/04, B62D 5/07, B62D 113/00, B62D 5/065

(54) **STEER-BY-WIRE STEERING SYSTEM**
STEER-BY-WIRE-LENKVORRICHTUNG
SYSTÈME DE DIRECTION À COMMANDE ÉLECTRIQUE

(43) Date of publication of application: 05.07.2017
(73) Proprietor: Shimadzu Corporation, Kyoto-shi, Kyoto 604-8511 (JP)
(72) Inventor: GOSHIMA, Daisuke, Kyoto-shi Kyoto 604-8511 (JP)
(74) Representative: Becker Kurig Straus
(86) International application number: PCT/JP2014/072769
(87) International publication number: WO 2016/031058

(56) References cited:
- EP-A1- 1 700 773
- EP-A2- 0 978 441
- EP-A2- 0 999 114
- EP-A2- 1 281 598
- DE-A1- 10 355 933
- JP-A- 2004 299 596
- JP-A- 2007 230 460
- JP-A- 2008 254 707
- JP-A- 2010 143 241
- JP-A- 2013 231 406
- US-A1- 2006 254 850

## Description

### BACKGROUND OF THE INVENTION

### 1. Field of the Invention

The present invention relates to a steer-by-wire steering system for an industrial vehicle or the like.

### 2. Description of Related Art

In recent years, a steer-by-wire electric hydraulic power steering is adopted as a steering system of an industrial vehicle or the like, typified by a forklift, supplied with energy from a battery. In the steer-by-wire electric hydraulic power steering, an operation of the steering is detected by an electric signal and input to a control device, and the control device is used to control a voltage supplied to a direct-current motor used for supplying power to a hydraulic pressure supply source (for example, refer to patent document 1). The electric hydraulic power steering uses an actuator equipped with a cylinder that is supplied with hydraulic pressure from a pump.

Previously, control of the electric hydraulic power steering is performed by the following method: detecting a steering angle or a rotation speed thereof (in other words, a rotation angle of the steering or an angular speed thereof), determining a target turning angle in accordance with the detected steering angle of the steering or rotation speed thereof, detecting the turning angle (in other words, a direction of a tire), and performing feedback control according to a deviation between the detected turning angle and the target turning angle, the feedback control outputting a control signal, such as a Pulse-Width Modulation (PWM) pulse signal or a frequency modulation signal, to an electric motor to change the turning angle so as to reduce the deviation. There is no mechanism for mechanically connecting the steering to the tire in such an electric hydraulic power steering, and it is inevitable that a time lag occurs before the steering angle is consistent with the turning angle, so that it is necessary to slightly adjust a correspondence between the steering angle and a control signal (a pulse width in a PWM pulse signal, or a frequency in a frequency modulation signal, or the like). In addition, the correspondence between the steering angle and the control signal is uniquely determined on the premise that properties of the electric motor, pump, and cylinder are not changed.

According to another aspect, a piston pump having little change in characteristics with respect to a change in a liquid temperature has been adopted as a pump used in such an electric hydraulic power steering, but in order to reduce manufacturing costs, it is conceivable to use an inexpensive gear pump to replace the piston pump.

### [Prior art document]

### [Patent document]

Patent document 1: JP2007-230460 (in particular, paragraph [0040] and FIG. 13)

DE 103 55 933 A1 discloses a steer-by-wire system having the features of the preamble of claim 1 and discloses a gear comprising a pump unit with an electric motor and a hydraulic pump operated in two rotating directions. An electronic controller controls the motor based on driving speed, loading condition, height of lifting of load and steering angle of a truck, and/or number of rotations or positions of a steered wheel. Two pressure lines are routed to respective pressure chambers of a steering actuator.

### SUMMARY OF THE INVENTION

Certainly, when a gear pump is used in such an electric hydraulic power steering, the following problem exits.

That is, control of a previous hydraulic power steering, as stated above, is performed on the basis that the correspondence between the steering angle and the pulse width of a PWM pulse signal is uniquely determined and on the premise that the steering angle and the discharge amount per unit time from the pump are uniquely determined. However, as a liquid temperature of the gear pump increases, the discharge amount of the working fluid per rotation decreases. Therefore, in a case that the previous control is performed, the follow-up of the hydraulic pressure and the turning angle with respect to the change in the steering angle is delayed and the operation feeling deteriorates.

With regard to the foregoing aspect, the present invention is directed to implementing a steering system that can suppress a delay in the change in the turning angle with respect to the change in the steering angle without adding a special component, regardless of the type of pump being adopted.

To resolve the foregoing problem, a steer-by-wire steering system of the present invention has the following structure. That is, the steer-by-wire steering system of the present invention includes: a hydraulic actuator for changing a turning angle of an object to be steered; a pump for supplying hydraulic pressure to the hydraulic actuator; an electric motor for rotating the pump in forward and reverse directions to operate the hydraulic actuator; a steering angle sensor for detecting a steering angle of a steering; a turning angle sensor for detecting the turning angle; and a control device for operating the electric motor according to signals from the steering angle sensor and the turning angle sensor to control the turning angle to be corresponded to the steering angle, and the control device includes: a steering angle receiving unit for receiving a signal from the steering angle sensor; a turning angle receiving unit for receiving a signal from the turning angle sensor; a deviation determining unit for sequentially determining a deviation between the steering angle and the turning angle according to the signals received by the steering angle receiving unit and the turning angle receiving unit; a motor driving unit for outputting a control signal to the electric motor in a direction of decreasing the deviation determined by the deviation determining unit, so as to control the electric motor; and a control correction unit for changing the control signal in a direction of decreasing a time lag according to the time lag between a change in the steering angle and a change in the turning angle derived according to the deviation. In a case a lag between the steering angle and the turning angle is lower than a first threshold, the control correction unit controls rotation speeds of the electric motor and pump by referring to a first target voltage map. Further, in case a lag between the steering angle and the turning angle becomes larger than a first threshold, the control correction unit determines that volumetric efficiency of the pump decreases and raises rotation speeds of the electric motor and pump by referring to a second target voltage map. Furthermore, in a case a lag between the steering angle and the turning angle becomes lower than a first threshold, the control correction unit determines that volumetric efficiency of the pump is recovered, and reduces rotation speeds of the electric motor and pump by referring to the first target voltage map, so as to compensate for reduction of the volumetric efficiency. A duty ratio of a PWM pulse signal output to the electric motor determined by referring to the second target voltage map is greater than the duty ratio determined by referring to the first target voltage with respect to a same target turning angle.

As stated above, even if a gear pump instead of a piston pump is used, when a discharge amount of a working fluid is decreased due to a rise in the liquid temperature, a deterioration of the device, or the like, a rotation speed is increased by changing a control signal to maintain working hydraulic pressure, so that the time lag can be suppressed.

Further, in the present invention, the so-called "object to be steered" refers to a concept of all components, for controlling a traveling direction, including components of a vehicle, such as a tire of a vehicle or a wheel (a vehicle wheel), or a rudder of a ship.

According to the present invention, a steering system that can suppress a delay in the change of a turning angle with respect to a change in a steering angle without adding a special component, regardless of the type of pump being adopted is implemented.

### BRIEF DESCRIPTION OF THE DRAWINGS

FIG. 1 is a brief diagram illustrating a steering system according to an embodiment of the present invention;
FIG. 2 is a flowchart illustrating a sequence of processing performed by a control device according to the embodiment of the present invention; and
FIG. 3(a) to FIG. 3(c) are diagrams illustrating an example of a relationship between a steering angle and a turning angle according to the embodiment of the present invention.

### DESCRIPTION OF THE EMBODIMENTS

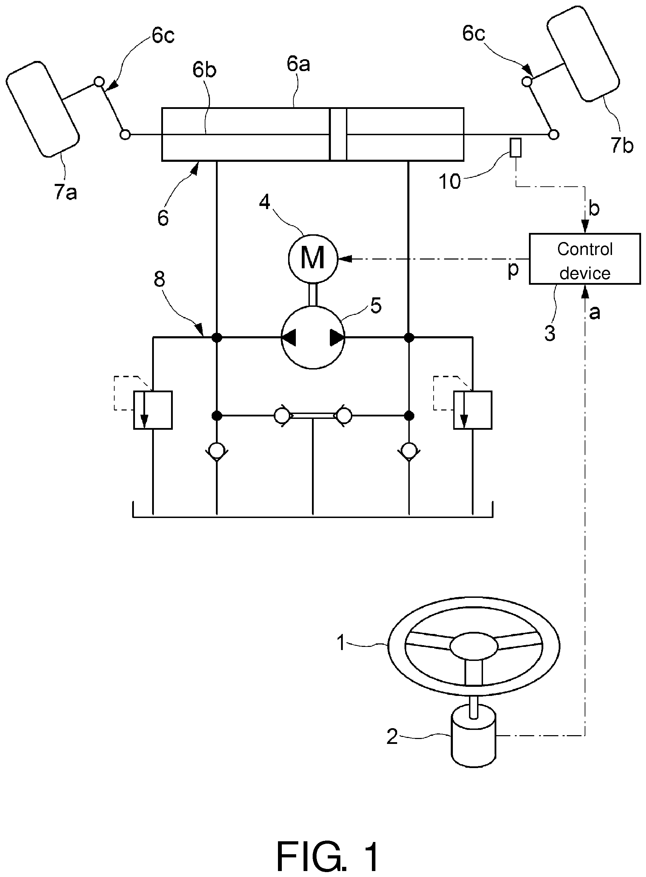

An embodiment of the present invention is described below with reference to FIG. 1 to FIG. 3.

A steer-by-wire steering system of the embodiment is an electric hydraulic power steering system of an industrial vehicle typified by a forklift. As shown in FIG. 1, the electric hydraulic power steering system includes: a hydraulic actuator 6 for changing a turning angle θ₂ of a tire 7a and a tire 7b; a pump 5 for supplying hydraulic pressure to the hydraulic actuator 6; a hydraulic circuit 8 for supplying a working fluid from the pump 5 to the hydraulic actuator 6; an electric motor 4 for rotating the pump 5 in forward and reverse directions to operate the hydraulic actuator 6; a steering angle sensor 2 for detecting a steering angle θ₁ of a steering 1; a turning angle sensor 10 for detecting the turning angle θ₂; and a control device 3 for operating the electric motor according to signals from the steering angle sensor 2 and the turning angle sensor 10 so as to control the turning angle θ₂ to be corresponded to the steering angle θ₁.

More specifically, the hydraulic actuator 6 has a structure the same as that of a well-known hydraulic actuator used for such a power steering system, and the structure includes: a cylinder 6a having a cylinder rod 6b that performs reciprocation by receiving supply of hydraulic pressure; and a knuckle arm 6c for changing the turning angle θ₂ of the tire 7a and tire 7b disposed on two ends of the cylinder rod 6b.

The pump 5 in this embodiment is a well-known gear pump capable of performing forward and reverse rotations.

The hydraulic circuit 8, as stated above, supplies the hydraulic pressure from the pump 5 to the hydraulic actuator 6 and has a structure the same as that of a well-known hydraulic circuit used for such a power steering system.

An output shaft of the electric motor 4 is connected to the pump 5 and receives supply of power from a motor driver (not shown). The motor driver receives a PWM pulse signal p from the control device 3 to operate the electric motor 4 and the pump 5 to rotate in forward and reverse directions.

The steering angle sensor 2 and the turning angle sensor 10 have structure the same as those of a well-known steering angle sensor and turning angle sensor used for such a power steering system, and therefore, detailed descriptions are omitted.

Hence, in the embodiment, the control device 3 respectively receives a steering angle θ₁ and a steering angle signal a, indicating a change speed thereof (an angular speed ω of a steering operation), from the steering angle sensor 2 and a turning angle signal b, indicating a turning angle θ₂, from the turning angle sensor 10, sequentially determines a deviation between the steering angle θ₁ and the turning angle θ₂ according to the received steering angle signal a and turning angle signal b, and performs feedback control on the electric motor 4 so as to reduce the deviation.

More specifically, the control device 3 is a micro computer system including a processor, a memory, an input interface, an output interface, and the like.

The input interface receives the steering angle signal a and the turning angle signal b, or the like.

The output interface outputs a PWM pulse signal p to the direct-current (DC) motor 4 (more strictly, a motor driver connected to the DC motor 4), and the PWM pulse signal p is a pulse signal utilizing ON/OFF of a DC voltage Vhi and is also a control signal.

The processor of the control device 3 interprets and executes a program pre-stored in the memory and calculates parameters, so as to perform different types of control.

In detail, a corresponding target turning angle map established for a steering angle θ₁ corresponding to the steering angle signal a and a target turning angle corresponding to the steering angle θ₁, and multiple corresponding target voltage maps established for the target turning angles and target voltages corresponding to the target turning angle, more specifically, a first target voltage map and a second target voltage map, are stored in a specified area of the memory. In addition, a feedback control program is stored in another specified area of the memory. The feedback control program, through execution of the processor, uses the steering angle θ₁ corresponding to the steering angle signal a as a parameter to refer to either of the first target voltage map and the second target voltage map so as to determine a target turning angle, receives the turning angle signal b, sequentially determines a deviation between a turning angle θ₂ corresponding to the received turning angle signal b and the target turning angle, and performs PWM control to reduce the deviation. Herein, the control performed by executing the feedback control program is the same as that in the conventional steer-by-wire steering system of this type, except that the target voltage map to be referred to is not one,. That is, the control device 3 of this embodiment has functions of a steering angle receiving unit, a turning angle receiving unit, and a deviation determining unit, and a motor driving unit in the claims.

In addition, in this embodiment, a target voltage map determining program is stored in still another specified area of the memory, and in the target voltage map determining program, through execution of the processor, which one of the first target voltage map and the second target voltage map should be referred to when executing the feedback control program is determined. The control performed by the target voltage map determining program is stated as follows. That is, a length of a period from a moment when the steering angle θ₁ does not change, that is, a moment when an angular speed ω of rotation of the steering 1 indicated by the steering angle signal a changes to 0, to a moment when the turning angle θ₂ reaches the target turning angle and a change speed of the turning angle θ₂ corresponding to the turning angle signal b changes to 0 is determined as a time lag (hereinafter referred to as a time lag T for short) between a change in the steering angle θ₁ and a change in the turning angle θ₂. Herein, the determination that the change speed of the turning angle θ₂ changes to 0 is, for example, performed by: after the angular speed ω of rotation of the steering 1 changes to 0, receiving and storing a turning angle signal b at intervals of a specified time (for example, 0.1 seconds), and the turning angle θ₂ corresponding to the turning angle signal b has been set to the same value three consecutive times. Based on the above, each time the time lag T exceeds a specified threshold T₀, the target voltage map to which a change between the first target voltage map and the second target voltage map should refer is controlled. In this embodiment, it is set that in the case that the second target voltage map is referred to, as compared with the case that the first target voltage map is referred to, a duty ratio (a pulse width) of a PWM pulse signal p corresponding to the same target turning angle becomes greater.

Further, the first target turning angle determination after an ignition switch changes from Off to On must be performed by referring to the first target voltage map. Afterward, in a case that volumetric efficiency of the pump 5 decreases because of an increase of an oil temperature and the like, rotation speeds of the electric motor 4 and pump 5 are raised by referring to the second target voltage map so as to compensate for reduction of the volumetric efficiency. Further, in a case that volumetric efficiency of the pump 5 is recovered because of a decrease of the oil temperature and the like caused by dramatic reduction of an external temperature, if the second target voltage map is continuously referred to, a time lag T caused by hunting of the turning angle θ₂ resulting from the rotation speeds of the electric motor 4 and pump 5 being too high is generated. At this time, by returning the target voltage map to be referred to back to the first target voltage map, the rotation speeds of the electric motor 4 and pump 5 are reduced and occurrence of hunting is suppressed. That is, the control device 3 of this embodiment also has a function as a control correction unit in the claims.

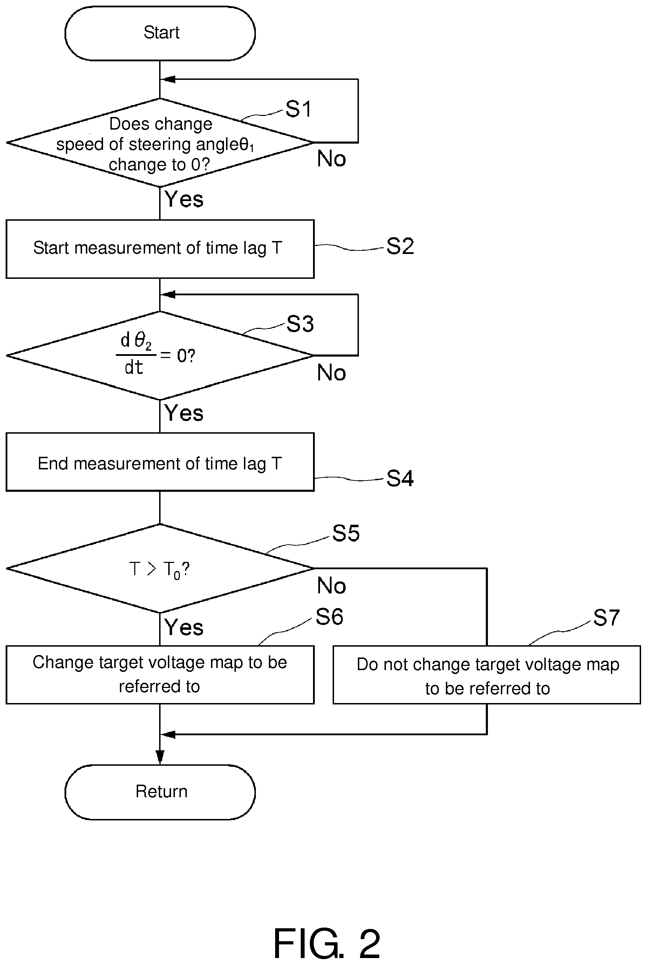

Hereinafter, a sequence of control performed by the processor performing the target voltage map determining program is described as follows by referring to FIG. 2 that serves as a flowchart.

First, if it is determined that an angular speed ω of rotation of the steering 1 indicated by the steering angle signal a, namely, a change speed of the steering angle θ₁, changes from a value other than 0 to 0 (step S1), measurement of a time lag T is started (step S2). Then, if the turning angle θ₂ reaches the target turning angle and a change speed of the turning angle θ₂ changes to 0 (step S3), the measurement of the time lag T is ended (step S4). In addition, when it is determined that a length of the time lag T exceeds a threshold T₀ (step S5), a target voltage map to be referred to is changed (step S6). According to another aspect, when it is determined that the length of the time lag T does not exceed the threshold T₀ (step S5), the target voltage map to be referred to is not changed (step S7).

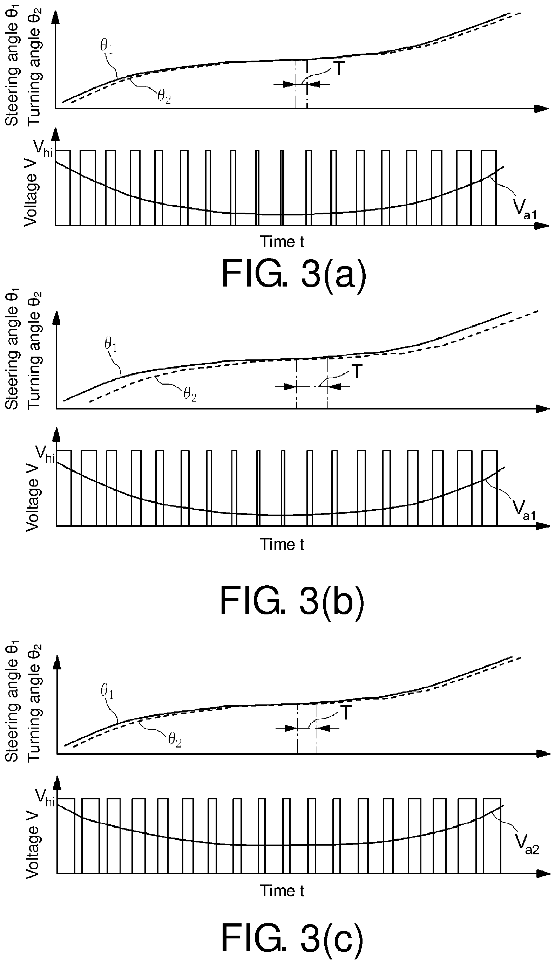

That is, according to this embodiment, for example, in a period when the deterioration of the pump 5 is small and the oil temperature does not greatly increase, even if a target voltage Vₐ₁ is determined by referring to the first target voltage map, as shown in FIG. 3(a), a time lag T between a change in the steering angle θ₁ and a change in an actual turning angle θ₂ corresponding to the turning angle signal b is also small, so that the duty ratio (the pulse width) of the PWM pulse signal p is determined by referring to the first target voltage map. According to another aspect, after the deterioration of the pump 5 becomes large or the oil temperature has greatly increased, if the target voltage Vₐ₁ is determined by referring to the first target voltage map, as shown in FIG. 3(b), the time lag T between the change in the steering angle θ₁ and the change in an actual turning angle θ₂ corresponding to the turning angle signal b becomes greater. But in this embodiment, the duty ratio (the pulse width) of the PWM pulse signal p is determined by referring to the second target voltage map, so that, as shown in FIG. 3(c), the time lag T between the change in the steering angle θ₁ and the change in the actual turning angle θ₂ corresponding to the turning angle signal b may be kept small. Therefore, even if a gear pump is used as the pump 5, when a discharge amount of a working fluid is decreased because of an increase in a liquid temperature, deterioration of a device, or the like, a rotation speed is raised to maintain working hydraulic pressure by increasing the duty ratio (the pulse width) of the PWM pulse signal p, so that a delay (the time lag T) of the change in the turning angle θ₂ relative to the change in the steering angle θ₁ can also be suppressed. That is, a gear pump may be used to replace a piston pump to reduce manufacturing costs.

Further, this embodiment is not limited to the foregoing embodiment.

For example, the following are considered as another manner for determining a time lag between a change in a steering angle and a change in a turning angle. That is, the steering angle θ₁ corresponding to the steering angle signal a and the turning angle θ₂ corresponding to the turning angle signal b are sequentially stored in a history storage unit that is secured in a specified area of the memory. The time associated with the target turning angle having a same value as the current turning angle θ₂ is determined by referring to the history storage unit and a difference between this time and the current time is determined as the time lag. Even when the manner is adopted, it is preferable to change the target voltage map to be referred to each time the time lag exceeds a specified threshold.

In addition, in the embodiment, two target voltage maps are stored in a specified area of a memory and when a time lag between a change in a steering angle and a change in a turning angle exceeds a specified threshold, the target voltage map to be referred to is set to be changed, but it could also be considered to store three target voltage maps in the specified area of the memory and perform control as follows. That is, for a same steering angle, an output voltage when referring to a first target voltage map is greater than an output voltage when referring to a second target voltage map, and the output voltage when referring to the second target voltage map is greater than an output voltage when referring to a third target voltage map. When the time lag exceeds a threshold, in case that the time lag is not resulted from hunting of the turning angle, the target voltage map to be referred to is changed from the first target voltage map to the second target voltage map or from the second target voltage map to the third target voltage map. According to another aspect, in case that the time lag is resulted from hunting of the turning angle, the target voltage map to be referred to is changed from the third target voltage map to the second target voltage map or from the second target voltage map to the first target voltage map.

Further, a manner that the output voltage to the electric motor is calculated according to a formula that uses a steering angle, a deviation between a target turning angle and an actual turning angle, and a time lag between a change in the steering angle and a change in the turning angle as parameters may be adopted.

In addition, in the embodiment, a steering angle signal output from the steering angle sensor also indicates a change speed of a steering angle (an angular speed of a steering operation), but certainly it can also be set to output a signal that only indicates a steering angle from the steering angle sensor at intervals of a specified time, sequentially store the steering angles indicated by the output signals, and determine that an angular speed of rotation of the steering becomes 0 by the fact that the stored steering angle has not changed for a specified period.

In addition, in the embodiment, output of an electric motor is controlled by outputting a PWM control signal to the electric motor, but certainly, the present invention may also be used in a steer-by-wire steering system that controls an electric motor not by means of PWM control, such as a steer-by-wire steering system that controls the output of an electric motor by means of frequency control.

In addition, the steering system and the like of the present invention may be used not only in control of a steering (such as a tire or a wheel) of a vehicle but also in control of another object to be steered that is typified by a rudder of a ship, so that various changes may be made within the scope not to impair the main idea of the present invention.

According to the present invention, a steering system that can suppress delays in changes in a turning angle with respect to changes in a steering angle without adding a special component, regardless of the type of pump being adopted is implemented.

## Claims

1. A steer-by-wire steering system, comprising:
a hydraulic actuator (6) for changing a turning angle of an object to be steered (1); a pump (5) for supplying hydraulic pressure to the hydraulic actuator (6); an electric motor (4) for rotating the pump (5) in forward and reverse directions to operate the hydraulic actuator (6); a steering angle sensor (2) for detecting a steering angle of a steering (1); a turning angle sensor (10) for detecting the turning angle; and a control device (3) for operating the electric motor (4) according to signals from the steering angle sensor (2) and the turning angle sensor (10) to control the turning angle to be corresponded to the steering angle, wherein:
the control device (3) comprises: a steering angle receiving unit for receiving a signal from the steering angle sensor (2); a turning angle receiving unit for receiving a signal from the turning angle sensor (10); a deviation determining unit for sequentially determining a deviation between the steering angle and the turning angle according to the signals received by the steering angle receiving unit and the turning angle receiving unit; a motor driving unit for outputting a control signal to the electric motor (4) in a direction of decreasing the deviation determined by the deviation determining unit to control the electric motor (4)
**characterized in that**
the system further comprises a control correction unit for changing the control signal in a direction of decreasing a time lag according to the time lag between a change in the steering angle and a change in the turning angle derived according to the deviation, wherein
in a case a lag between the steering angle and the turning angle is lower than a first threshold (T0), the control correction unit controls rotation speeds of the electric motor (4) and pump (5) by referring to a first target voltage map;
in case a lag between the steering angle and the turning angle becomes larger than a first threshold (T0), the control correction unit determines that volumetric efficiency of the pump (5) decreases and raises rotation speeds of the electric motor (4) and pump (5) by referring to a second target voltage map; and
in a case a lag between the steering angle and the turning angle becomes lower than a first threshold (T0), the control correction unit determines that volumetric efficiency of the pump (5) is recovered, and reduces rotation speeds of the electric motor (4) and pump (5) by referring to the first target voltage map, so as to compensate for reduction of the volumetric efficiency, wherein
a duty ratio of a PWM pulse signal output to the electric motor (4) determined by referring to the second target voltage map is greater than the duty ratio determined by referring to the first target voltage with respect to a same target turning angle.

## Patentansprüche

1. Steer-by-Wire-Lenksystem, umfassend:
einen hydraulischen Aktuator (6) zum Ändern eines Drehwinkels eines zu steuernden Objekts (1); eine Pumpe (5) zum Zuführen von hydraulischen Druck zum hydraulischen Aktuator (6); einen Elektromotor (4) zum Rotieren der Pumpe (5) in vorwärts- und rückwärts Richtungen zum Betreiben des hydraulischen Aktuators (6); ein Lenkwinkelsensor (2) zum Erfassen eines Lenkwinkels einer Lenkung (1); ein Drehwinkelsensor (10) zum Erfassen des Drehwinkels; und ein Steuergerät (3) zum Betreiben des Elektromotors (4) gemäß der Signale des Lenkwinkelsensors (2) und des Drehwinkelsensors (10) um den Drehwinkel so zu steuern, dass er dem Lenkwinkel entspricht, wobei:
das Steuergerät (3) umfasst: eine Lenkwinkelempfangseinheit zum Empfangen eines Signals vom Lenkwinkelsensor (2); eine Drehwinkelempfangseinheit zum Empfangen eines Signals vom Drehwinkelsensor (10); eine Abweichungsbestimmungseinheit zum sequentiellen Bestimmen einer Abweichung zwischen dem Lenkwinkel und dem Drehwinkel gemäß den von der Lenkwinkelempfangseinheit und der Drehwinkelempfangseinheit empfangenen Signalen; eine Motorantriebseinheit zum Ausgeben eines Steuersignals an den Elektromotor (4) in einer Richtung zum Verringern der Abweichung, die durch die Abweichungsbestimmungseinheit bestimmt ist, um den Elektromotor (4) zu steuern, **dadurch gekennzeichnet, dass** das System weiterhin umfasst, eine Steuerkorrektureinheit zum Ändern des Steuersignals in eine Richtung zum Verringern einer Zeitverzögerung gemäß der Zeitverzögerung zwischen einer Änderung des Lenkwinkels und einer Änderung des Drehwinkels, die gemäß der Abweichung abgeleitet wird, wobei
in einem Fall, in dem eine Verzögerung zwischen dem Lenkwinkel und dem Drehwinkel kleiner als ein erster Schwellenwert (T0) ist, steuert die Steuerkorrektureinheit die Drehzahlen des Elektromotors (4) und der Pumpe (5) unter Bezugnahme auf einen ersten Zielspannungsplan;
falls eine Verzögerung zwischen dem Lenkwinkel und dem Drehwinkel größer als ein erster Schwellenwert (T0) wird, bestimmt die Steuerkorrektureinheit, dass die volumetrische Effizienz der Pumpe (5) die Drehzahlen des Elektromotors (4) und der Pumpe (5) unter Bezugnahme auf einen zweiten Zielspannungsplan verringert und erhöht; und
in einem Fall, in dem eine Verzögerung zwischen dem Lenkwinkel und dem Drehwinkel kleiner als ein erster Schwellenwert (T0) wird, bestimmt die Steuerkorrektureinheit, dass die volumetrische Effizienz der Pumpe (5) wiederhergestellt wird, und reduziert die Drehzahlen des Elektromotors (4) und der Pumpe (5) unter Bezugnahme auf den ersten Zielspannungsplan, um eine Verringerung der volumetrischen Effizienz auszugleichen, wobei
ein Einschaltverhältnis eines PWM-Impulssignals, das an den Elektromotor (4) ausgegeben wird, das durch Bezugnahme auf den zweiten Zielspannungsplan bestimmt wird, größer als das Einschaltverhältnis ist, das durch Bezugnahme auf die erste Zielspannung in Bezug auf einen gleichen Zieldrehwinkel bestimmt wird.

## Revendications

1. Système de direction à commande électrique, comprenant :
un actionneur hydraulique (6) pour changer un angle de braquage d'un objet à diriger (1), une pompe (5) pour fournir de la pression hydraulique à l'actionneur hydraulique (6), un moteur électrique (4) pour faire tourner la pompe (5) en avant et en arrière pour faire fonctionner l'actionneur hydraulique (6), un capteur d'angle de direction (2) pour détecter un angle de direction d'une direction (1), un capteur d'angle de braquage (10) pour détecter l'angle de braquage et un dispositif de commande (3) pour faire fonctionner le moteur électrique (4) selon des signaux venant du capteur d'angle de direction (2) et du capteur d'angle de braquage (10) pour commander l'angle de braquage afin qu'il corresponde à l'angle de direction, dans lequel :
le dispositif de commande (3) comprend : une unité de réception d'angle de direction pour recevoir un signal du capteur d'angle de direction (2), une unité de réception d'angle de braquage pour recevoir un signal du capteur d'angle de braquage (10), une unité de détermination d'écart pour déterminer de façon séquentielle un écart entre l'angle de direction et l'angle de braquage selon les signaux reçus par l'unité de réception d'angle de direction et l'unité de réception d'angle de braquage, une unité d'entraînement motorisée pour produire un signal de commande pour le moteur électrique (4) dans un sens de diminution de l'écart déterminé par l'unité de détermination d'écart pour commander le moteur électrique (4),
**caractérisé en ce que**
le système comprend en plus
une unité de correction de commande pour modifier le signal de commande dans un sens de diminution d'un décalage de temps selon le décalage de temps entre un changement de l'angle de direction et un changement de l'angle de braquage dérivé conformément à l'écart,
au cas où un décalage entre l'angle de direction et l'angle de braquage est inférieur à un premier seuil (T0), l'unité de correction de commande commande les vitesses de rotation du moteur électrique (4) et de la pompe (5) en se référant à un premier plan de tension ciblé,
au cas où un décalage entre l'angle de direction et l'angle de braquage devient plus grand qu'un premier seuil (T0), l'unité de correction de commande détermine que le rendement volumétrique de la pompe (5) diminue et relève les vitesses de rotation du moteur électrique (4) et de la pompe (5) en se référant à un deuxième plan de tension ciblé, et
au cas où un décalage entre l'angle de direction et l'angle de braquage devient plus faible qu'un premier seuil (T0), l'unité de correction de commande détermine que le rendement volumétrique de la pompe (5) est récupéré et réduit les vitesses de rotation du moteur électrique (4) et de la pompe (5) en se référant au premier plan de tension ciblé de manière à compenser une réduction du rendement volumétrique,
un rapport cyclique d'une production de signal d'impulsion à modulation de largeur d'impulsion (MLI) pour le moteur électrique (4) déterminé en se référant au deuxième plan de tension ciblé est plus grand que le rapport cyclique déterminé en se référant à la première tension ciblée eu égard au même angle de braquage ciblé.
